Europäisches Patentamt

European Patent Office

Office européen des brevets

(19)

(11) Veröffentlichungsnummer: **0 027 970**
**B1**

(12)

# EUROPÄISCHE PATENTSCHRIFT

(45) Veröffentlichungstag der Patentschrift:
**25.01.84**

(51) Int. Cl.³: **B 65 D 51/00**

(21) Anmeldenummer: **80106325.6**

(22) Anmeldetag: **17.10.80**

(54) Verschlussvorrichtung, insbesondere für Flüssigkeitsbehälter in Kraftfahrzeugen.

(30) Priorität: **24.10.79 DE 7930071 U**

(43) Veröffentlichungstag der Anmeldung:
**06.05.81 Patentblatt 81/18**

(45) Bekanntmachung des Hinweises auf die Patenterteilung:
**25.01.84 Patentblatt 84/4**

(84) Benannte Vertragsstaaten:
**DE FR GB IT**

(56) Entgegenhaltungen:
**FR - A - 2 312 416**

(73) Patentinhaber: **Walter Alfmeier GmbH + Co
Präzisions-Baugruppenelemente, Industriestrasse 5,
D-8830 Treuchtlingen (DE)**

(72) Erfinder: **Hofmann, Heinz, Ludwig-Thoma-Strasse 28,
D-8830 Treuchtlingen (DE)**

(74) Vertreter: **Tergau, Enno et al,
Hefnersplatz 3 Postfach 11 93 47,
D-8500 Nürnberg 11 (DE)**

## Verschlussvorrichtung, insbesondere für Flüssigkeitsbehälter in Kraftfahrzeugen

Die Erfindung geht von einer Verschlussvorrichtung mit den Einzelmerkmalen des Oberbegriffes des Patentanspruches 1 aus.

Aus FR-A-2 312 416 ist eine Verschlussvorrichtung für rohrförmige Füllstutzen von Behältern bekannt, die ein in den Behälterstutzen hineinstehendes Unterteil hat, welches von einem Dichtungsring umspannt wird, der in Schliessstellung unter Druck die Innenwandung des Behälterstutzens beaufschlagt. Der radiale Schliessdruck wird dadurch erzielt, dass durch relative Verdrehung des Oberteils gegenüber dem Unterteil der Verschlussvorrichtung der Dichtungsring in axialer Richtung gepresst wird und sich dadurch in radialer Richtung verformt. Diese bekannte Vorrichtung ist insofern nachteilig, als hohe Schliessdrücke, wie sie beispielsweise für Tankverschlüsse von Kraftfahrzeugen erforderlich sind, auch nicht annähernd erzielt werden können.

Der Erfindung liegt die Aufgabe zugrunde, eine Verschlussvorrichtung, insbesondere für Flüssigkeitsbehälter in Kraftfahrzeugen, welche aus Aluminium oder Kunststoffen hergestellt sind und deren Einfüllstutzen weder ein Bajonett- noch ein Schraubgewinde tragen, zu schaffen. Weiterhin sollte eine derartige Verschlussvorrichtung kompakt und leicht gebaut sein, sie muss dicht sein und eine hohe Verschleissfestigkeit aufweisen, sie sollte kostengünstig herstellbar sein und den hohen Sicherheitsanforderungen im Kraftfahrzeugbau genügen.

Diese Aufgabe wird durch das Kennzeichen des Anspruches 1 gelöst. Durch die Anordnung des Dichtungsringes um das in den Füllstutzen hineinragende Unterteil kann auf ein Bajonett- oder ein Schraubgewinde am oberen Rande des Einfüllstutzens verzichtet werden. Der Dichtungsring ist durch radial bewegliche und manuell betätigbare Spreizlamellen mit seinem Innendurchmesser radial abgestützt.

Die Spreizlamellen können in eine Spreizraststellung gebracht werden, in welcher sie den Dichtungsring radial dehnen und nach aussen gegen die Innenwandung des Füllstutzen des Behälters pressen. In dieser Stellung ist der Aussendurchmesser des Dichtungsringes grösser als der Durchmesser des Füllstutzens, wodurch eine gute Dichtpressung gewährleistet ist.

Die Spreizraststellung ist in eine Entlastungsstellung überführbar, in welcher die Spreizlamellen der radial nach innen gerichteten Eigenspannung des Dichtungsringes nachgeben. In dieser Stellung ist der Aussendurchmesser des Dichtungsringes kleiner oder gleich dem Innendurchmesser des Füllstutzens, wodurch die Dichtung der Vorrichtung aufgehoben wird und der Verschluss leicht aus der Öffnung des Füllstutzens entnommen werden kann.

Die Merkmale des Patentanspruches 2 beinhalten eine besonders kompakte und vorteilhafte Ausbildung der Verschlussvorrichtung bezüglich ihres Spreizhebelmechanismus. Durch die Verbindung der inneren Enden der Spreizlamellen mit einer axial verschieblichen zentralen Hülse wird die axiale Schiebebewegung der Hülse in eine radiale Bewegung der Spreizlamellen überführt.

Die Begrenzung des Verschiebeweges der Hülse durch zwei Anschläge bewirkt eine wohldefinierte Pressung des Dichtungsringes gegen die Innenwand des Behälterstutzens in der Spreizraststellung sowie eine Begrenzung der radial nach innen gerichteten Bewegung des Dichtungsringes sowie der Spreizlamellen in der Entlastungsstellung.

Durch die Lehre des Patentanspruches 3 wird gewährleistet, dass eine gute Abdichtung zwischen dem Innenrand des Behälterstutzens und der Oberseite des Unterteiles der Vorrichtung erfolgt. Der Dichtungsring deformiert sich unter dem radial nach aussen gerichteten Druck der Spreizlamellen sowie dem Gegendruck der Füllstutzeninnenwandung in axialer Richtung derart, dass neben der Pressung des Dichtungsringes gegen die Innenwandung des Füllstutzens auch eine nach unten gerichtete Pressung des Dichtungsringes gegen die Oberseite des Unterteils der Vorrichtung bewirkt wird.

Die Merkmale des Patentanspruches 4 beziehen sich auf eine besonders vorteilhafte Ausbildung des Spreizlamellenschirmes. Durch die einstückige Ausführung aus Kunststoff aller Spreizlamellen sowie der zentralen Hülse kann der gesamte Spreizhebelmechanismus in einem Arbeitsgang gespritzt werden. Vorteilhaft erweist sich ausserdem die Einstückigkeit des Spreizlamellenschirmes bei der Endmontage der Vorrichtung. Durch die strahlenförmige Anordnung der Spreizlamellen am äusseren Umfange der zentralen Hülse wird weiterhin gewährleistet, dass sich der radial nach aussen gerichtete Druck nahezu auf den gesamten inneren Umfang des Dichtungsringes gleichmässig verteilt.

Durch die Form der Spreizlamellen an ihren radial äusseren Enden gemäss den Merkmalen des Patentanspruches 5 wird der radial nach aussen gerichtete Druck der einzelnen Spreizlamellen in vorteilhafter Weise auf den inneren Umfang des Dichtungsringes übertragen.

Aus Patentanspruch 6 ist zu entnehmen, dass die Spreizlamellen konvex bogenförmig nach unten ausgeformt sind und ausserdem die Oberseite des Unterteils konkave Anlageschrägflächen aufweist, die den konvexen Ausformungen der Spreizlamellen gegenüberliegen.

In Spreizraststellung gleiten die konvexen Ausformungen im wesentlichen formschlüssig an die konkaven Anlageschrägflächen an, da beide im wesentlichen dieselbe Krümmungskurve aufweisen. Durch diesen Formschluss wird der radial nach innen gerichtete Druck des deformierten Dichtungsringes zumindest teilweise von den Anlageschrägflächen abgefangen und somit die scharnierartigen Verbindungsstege zwischen den Spreizlamellen und der zentralen Hülse entlastet.

Gemäss Merkmal 1 des Patentanspruches 7 schliessen die Unterseiten der Spreizlamellen in Spreizstellung mit der Axialrichtung einen grösseren Winkel ein als in Entlastungsstellung. Diese Winkelvergrösserung hat eine vorteilhafte Vergrösserung des äusseren Durchmessers des Spreizlamellenschirmes zur Folge. Gemäss Merkmal 2 des Patentanspruches 7 liegen die Verbindungsstege zwischen den Spreizlamellen und der zentralen Hülse in Spreizstellung unterhalb und in Entlastungsstellung oberhalb der imaginären Verbindungslinie der Zentren der sich radial gegenüberliegenden Dichtungsquerschnitte. Durch Unterschreiten des auf dieser Verbindungslinie liegenden Totpunktes wird eine besonders vorteilhafte Selbstverrastung des Spreizlamellenschirmes in Spreizraststellung nach Art einer Kniehebelvorrichtung erreicht.

Durch die Führung der äusseren Enden der Spreizlamellen zwischen Oberteil und Unterteil auf ebenen Gleitflächen wird ein Verkanten der Spreizlamellen bei ihrer radialen Verschiebung vermieden und somit eine verschleissarme und sichere Funktion des Verschlussmechanismus gewährleistet.

Die Merkmale des Patentanspruches 9 beinhalten die Anordnung eines Betätigungsgriffes im Oberteil der Vorrichtung. Da die Drehachse rechtwinklig zur Axialrichtung und exzentrisch im Oberteil befestigt ist, lässt sich die Verschlussvorrichtung durch Anheben des freien Endes des Betätigungsgriffes, dessen wirksame Hebellänge nahezu mit dem Maximaldurchmesser der Vorrichtung identisch ist, von der Bedienungsperson ohne grossen Kraftaufwand durchführen.

Die Merkmale des Patentanspruches 10 beinhalten die bezüglich Herstellungskosten und Platzersparnis vorteilhafte Anordnung eines Hebelelementes auf der Achse des Betätigungsgriffes, durch welches die Schwenkbewegung des Betätigungsgriffes auf die zentrale Hülse des Spreizlamellenschirmes übertragen wird.

Die Merkmale des Patentanspruches 11 beschreiben die relativen Schwenkbewegungen des Betätigungsgriffes sowie des im Betätigungsgriff angeordneten Hebelelementes.

Der Betätigungsgriff kann von der Bedienungsperson zunächst um einen gewissen Winkelbetrag nach oben verschwenkt werden, ohne dass die Schwenkbewegung des Betätigungsgriffes auf den Verschlussmechanismus einwirkt.

Erst nach Überstreichen dieses ersten Schwenkbereiches kommen am Betätigungsgriff angeordnete Mitnehmerflächen mit am Hebelelement angeformten Mitnehmeranschlagflächen in Eingriff und lösen die Entrastung des Spreizlamellenschirmes auf.

Ebenso kann der Betätigungsgriff beim Verschliessen der Vorrichtung von seiner Öffnungsstellung über einen ersten Schwenkbereich hinweg antriebslos verschwenkt werden und bewirkt erst bei seiner Verschwenkung über einen weiteren Winkelbereich ein Verrasten des Spreizlamellenschirmes über dessen Totpunkt hinaus. Durch die antriebslose Verschwenkung des Betätigungsgriffes in eine gut handhabbare Stellung ist die Bedienung der Vorrichtung mit nur kleinem Kraftaufwand möglich.

Aus den Merkmalen des Patentanspruches 12 kann eine besonders vorteilhafte Ausbildung der mechanischen Kopplung zwischen dem Hebelelement und der zentralen Hülse des Spreizlamellenschirmes entnommen werden. Durch diese Ausführung ist eine problemlose Übertragung der Schwenkbewegung des Hebelelementes in die Axialbewegung der zentralen Hülse gewährleistet.

Durch die Merkmale des Patentanspruches 13 wird ein besonders fester Sitz der Verschlussvorrichtung in der Öffnung des Füllstutzens bei optimaler Abdichtung erreicht. Des weiteren wird durch die Ringnut bzw. Stufe sichergestellt, dass der Verschluss in abgesperrter Spreizraststellung nicht ohne Gewaltanwendung vom Füllstutzen entfernt werden kann.

Gemäss Merkmal 1 des Patentanspruches 14 ist der Betätigungsgriff im Oberteil der Vorrichtung versenkt. Durch diese Versenkung wird der Forderung nach Vermeidung abstehender Kanten an den Aussenflächen moderner Kraftfahrzeuge entsprochen.

Des weiteren ist der Betätigungsgriff an seinem freien Ende gemäss Merkmal 2 des Patentanspruches 14 mit Griffplatten versehen, die vom Oberteil der Vorrichtung in radialer Richtung frei abstehen. Dadurch ist eine einfache Handhabung des Betätigungsgriffes ermöglicht. Durch die Anordnung eines Schlosses mit einem Sperriegel ist die Verschlussvorrichtung gegen missbräuchliches Öffnen durch Dritte geschützt.

Die Merkmale des Patentanspruches 15 beinhalten Massnahmen zur Anordnung eines vorschriftmässigen Belüftungsventiles in der Verschlussvorrichtung. Der bei Temperaturerhöhung des Behälterinhaltes auftretende Überdruck kann durch das Belüftungsventil und durch eine Belüftungsröhre nach aussen abgeleitet werden.

Durch die kennzeichnenden Merkmale des Patentanspruches 16 ist eine weitere leicht zu bedienende, platzsparende und preisgünstig herzustellende Verschlussvorrichtung geschaffen. Diese Ausführungsform ist insbesondere dann vorteilhaft, wenn der Tankverschluss auf Einfüllstutzen eingesetzt werden soll, die in engen Karosserienischen oder Karosseriehohlräumen aus der Karosserie austreten. Durch den in Radialrichtung verminderten Durchmesser des Betätigungsknaufes gegenüber dem als Schwenkhebel ausgebildeten Betätigungsgriff kann die Karosserieausnehmung ebenfalls einen kleineren Durchmesser aufweisen, ohne dass die leichte Bedienbarkeit der erfindungsgemässen Verschlussvorrichtung beeinträchtigt ist.

Die Führung der zentralen Hülse sowohl in einem Führungsrohr des Oberteils als auch einer topfartigen Ausnehmung im Unterteil der Verschlussvorrichtung gewährleistet eine dauerhafte und verkantungsfreie Öffnungs- und Schliessbewegung. Der radial nach innen wirksame Druck der Spreizlamellen wird unmittelbar im Anlenkbereich der Spreizlamellen an der Hülse auf das Gehäuseoberteil bzw. das Gehäuseunterteil übertragen.

Durch das Kennzeichen des Anspruches 18 wird vermieden, dass die Spreizlamellen bei Ausübung eines Schliessdruckes auf den Betätigungsknauf am Unterteil der Vorrichtung anlaufen und somit ihre Anlenkungsstege einer übermässigen Scherbelastung ausgesetzt sind.

Da die Hülse nunmehr lediglich umfänglich geführt ist, steht ihr Innenraum für einen Schliesszylinder zur Verfügung. Da der Schliesszylinder fest mit der Hülse und damit mit den die Versperrung der Verschlussvorrichtung bewirkenden Spreizlamellen verbunden ist, ist eine Öffnung der Verschlussvorrichtung durch unberechtigte Dritte nur bei nahezu vollständiger Zerstörung der Verschlussvorrichtung möglich.

Durch die Merkmale des Anspruches 19 ist sichergestellt, dass sich insbesondere bei Schlossbetätigung der Betätigungsknauf, die Hülse und der daran angeformte Spreizlamellenschirm nicht gegenüber dem Unter- bzw. Oberteil der Verschlussvorrichtung verdrehen, wodurch ein leichtes und insbesondere einhändiges Betätigen des Schlosses möglich ist.

Der Erfindungsgegenstand wird anhand zweier Ausführungsbeispiele in mehreren Figuren näher erläutert. Es zeigen:

Figur 1 einen Vertikalschnitt entlang der Mittelachse einer mit Schwenkhebel ausgestatteten Verschlussvorrichtung in geschlossenem, abdichtendem Zustand,

Figur 2 einen Vertikalschnitt entlang der Mittelachse einer mit Schwenkhebel ausgestatteten Verschlussvorrichtung in entriegelter, nicht dichtender Stellung,

Figur 3 einen Horizontalschnitt entlang der Schnittlinie A-A gemäss Figur 1,

Figur 4 eine Aufsicht auf die Oberseite der Verschlussvorrichtung gemäss Figur 1 (Pfeil IV),

Figur 5 einen Vertikalschnitt entlang der Mittelachse einer mit Betätigungsknauf versehenen Verschlussvorrichtung in entriegelter, nicht dichtender Stellung sowie

Figur 6 einen Vertikalschnitt entlang der Mittelachse einer mit Betätigungsknauf versehenen Verschlussvorrichtung in geschlossenem, abdichtendem Zustand.

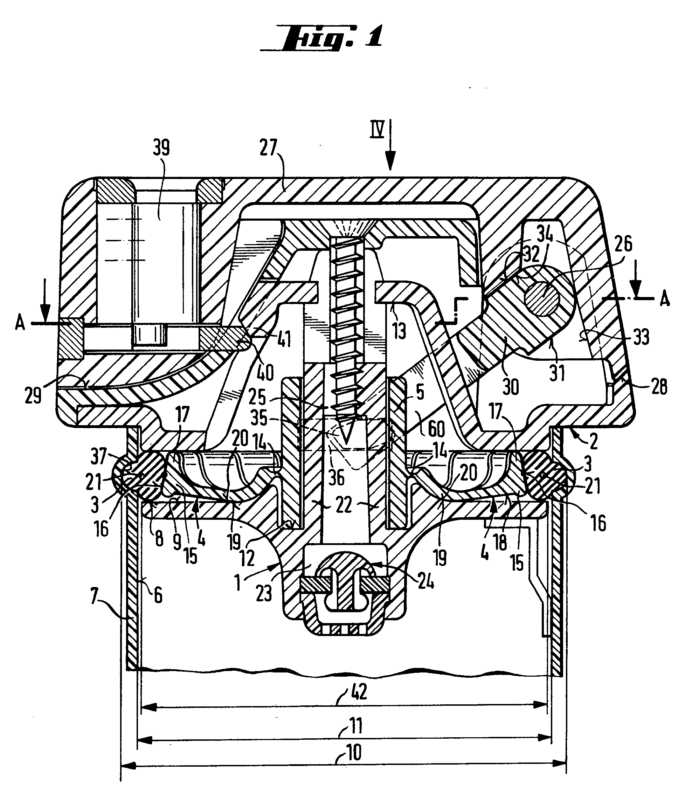

Das in den Figuren 1-4 dargestellte erste Beispiel der Erfindung besteht im wesentlichen aus einem Unterteil 1 und einem Oberteil 2, einem Dichtungsring 3 sowie einem Spreizmechanismus für den Dichtungsring, der aus Spreizlamellen 4 und einer zentralen Hülse 5 gebildet wird.

Durch den Spreizmechanismus ist es ermöglicht, den Dichtungsring 3 in radialer Richtung nach aussen gegen die Innenwand 6 des Füllstutzens 7 zu pressen sowie den Dichtungsring 3 axial so zu verformen, dass er mit seiner Unterseite 8 gegen die Oberseite 9 des Unterteiles 1 gepresst wird.

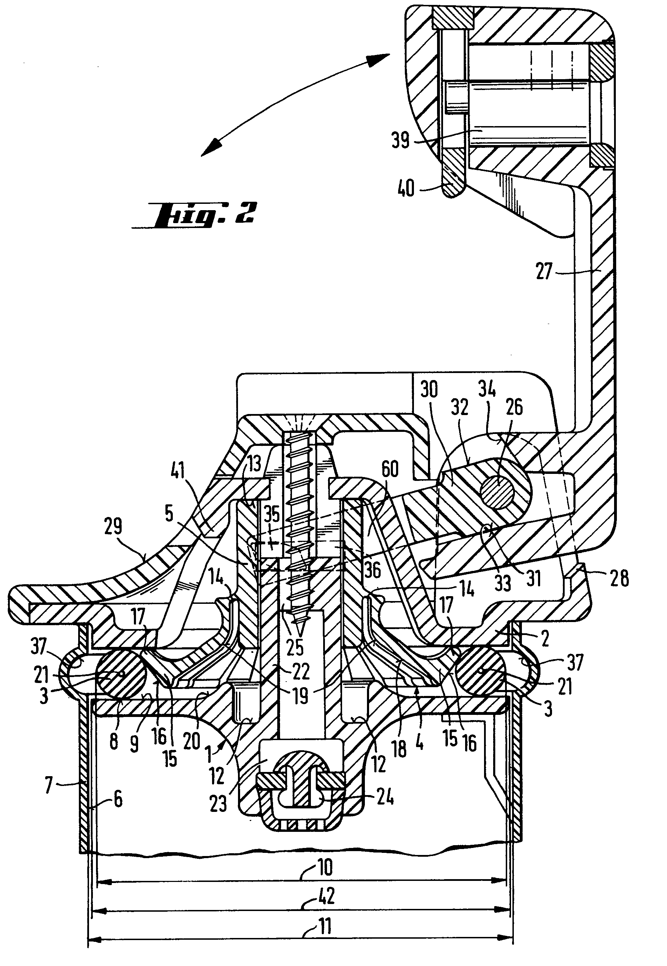

Die Spreizlamellen 4 können zwei Stellungen einnehmen, nämlich eine erste Spreizraststellung, in welcher der Aussendurchmesser 10 des Dichtungsringes 3 grösser als der Innendurchmesser 11 des Füllstutzens 7 ist (Fig. 1) und eine zweite sogenannte Entlastungsstellung, in welcher der Aussendurchmesser 10 des Dichtungsringes 3 kleiner oder gleich dem Innendurchmesser 11 des Füllstutzens 7 ist (Fig. 2). Da der Dichtungsring 3 das Unterteil 1 der Vorrichtung sowie die Spreizlamellen 4 umfängt und das Unterteil 1 in die Öffnung des Füllstutzens 7 hineinragt, wird durch die von den Stützelementen 4 verursachte Pressung des Gummiringes 3 radial nach aussen gegen die Innenwand 6 des Füllstutzens 7 sowohl eine gute Abdichtung des Verschlusses wie auch ein fester Sitz desselben in dem Füllstutzen 7 gewährleistet. Der Aussendurchmesser 42 der Oberseite 9 des unteren Tellers des Unterteiles 1 ist etwas kleiner als der Innendurchmesser 11 des Füllstutzens 7.

Die Spreizlamellen 4 sind in ihrer radialen Druckbewegung durch eine scharnierartige Befestigung 14 ihrer radial inneren Enden an der zentralen Hülse 5 sowie aufgrund ihrer Anordnung zwischen Oberteil 2 und Unterteil 1 zwangsgeführt. Die Hülse 5 ist in Axialrichtung zwischen zwei Anschlägen 12 und 13 verschieblich. Der Anschlag 12 wird durch eine ringförmige Ausnehmung im Unterteil 1 der Vorrichtung gebildet, der Anschlag 13 durch an der Unterseite des Oberteils 2 angeordnete Anschlagflächen.

Die Spreizlamellen 4 und die zentrale Hülse 5 sind einstückig aus Kunststoff geformt. Dabei sind die Spreizlamellen 4 strahlenförmig am äusseren Umfang der zentralen Hülse 5 mit dünnen flexiblen Verbindungsstegen 14 befestigt, wodurch eine scharnierartige Verbindung zwischen den Spreizlamellen 4 und der zentralen Hülse 5 gewährleistet ist. Die Spreizlamellen 4 bilden somit mit der zentralen Hülse 5 eine schirmartige Kniehebelvorrichtung.

Bei Aufwärtsbewegung der zentralen Hülse 5 auf den Anschlag 13 zu werden die radial inneren Enden der Spreizlamellen 4 nach oben gezogen. Da die äusseren Enden 15 der Spreizlamellen 4 aufgrund ihrer Führung zwischen Oberteil 2 und Unterteil 1 der Vorrichtung lediglich eine radiale Bewegung ausführen können, werden die Spreizlamellen bei Bewegung der Hülse 5 nach oben ebenfalls jeweils schräg nach oben verschwenkt, der «Spreizlamellenschirm» faltet sich zusammen, wodurch sich sein durch seine äusseren Enden 15 gebildeter Umfang verringert. Durch diese Faltbewegung des Spreizlamellenschirmes zieht sich der Dichtungsring 3, der um die an den äusseren Enden 15 der Spreizlamellen 4 angebrachten Stützflächen 16 unter Spannung herumliegt, zusammen und gibt die Innenwandung 6 des Füllstutzens 7 frei.

Wird die Hülse 5 nach unten auf die Anschläge 12 zugedrückt, werden die als flexible Stege 14 ausgebildeten scharnierähnlichen Verbindungen zwischen den Spreizlamellen 4 und der zentralen Hülse 5 ebenfalls nach unten mitgenommen und die Spreizlamellen 4 werden radial nach aussen gedrückt, wobei der äussere Umfang des Dichtungsringes 3 wiederum gegen die Innenwandung 6 des Behälterstutzens 7 gepresst wird. Dadurch wird wieder eine Abdichtung des Stutzens 7 und ein fester Sitz der Verschlussvorrichtung auf dem Stutzen 7 erreicht.

Um eine grossflächige Beaufschlagung der Innenseite des Dichtungsringes 3 zu gewährleisten, verlaufen die radial äusseren Enden 15 der Spreizlamellen 4 in nach oben gerichteten Nasen 17.

Die Spreizlamellen 4 sind an ihrer Unterseite 18 mit konvexen Ausformungen 19 versehen, welche in Spreizraststellung auf konkave Anlageschrägflächen 20 aufgleiten, die ihrerseits auf der Oberseite des Unterteils der Vorrichtung 1 angeformt sind. Durch dieses Aufgleiten ist gewährleistet, dass ein Teil des zentripedal gerichteten Druckes, der durch die Pressung des Dichtungsringes 3 gegen die Innenwandung 6 des Behälterstutzens 7 bewirkt wird, auf den Anlageschrägflächen 20 abgefangen wird und somit die dünnen, flexiblen Verbindungsstege 14 zwischen den Spreizlamellen 4 und der zentralen Hülse 5 entlastet werden.

Der aus der zentralen Hülse 5 und den Spreizlamellen 4 gebildete Spreizlamellenschirm verrastet selbständig in der Spreizraststellung, da sich die Verbindungsstege 14 in dieser Stellung unter dem auf der imaginären Verbindungsebene der Zentren 21 der sich radial gegenüberliegenden Dichtungsringquerschnitte liegenden Totpunkt befinden. In Entlastungsstellung, d.h. bei kontrahiertem Dichtungsring 3 hingegen befinden sich die Verbindungsstege 14 weit oberhalb dieser imaginären Verbindungsebene.

Zur exakten Führung der Hülse 5 ist einstückig an das Unterteil 1 der Vorrichtung ein axial verlaufender Führungszapfen 22 angespritzt, auf dem die Hülse 5 auf- und abgleiten kann. Der Führungszapfen 22 ist an seinem unteren Ende von dem aus einer ringförmigen Nut bestehenden Anschlag 12 umgeben.

An der Unterseite des Unterteiles 1 ist koaxial mit dem Führungszapfen 22 eine zylindrische Ausnehmung 23 zur Aufnahme eines üblichen Belüftungsventils 24 vorgesehen. Die zylindrische Ausnehmung 23 setzt sich nach oben in radialer Richtung in einer Belüftungsröhre 25 fort, die durch den Führungszapfen 22 und somit durch das Unterteil 1 hindurchgreift.

An dem der Bedienungsperson der Verschlussvorrichtung zugänglichen Oberteil 2 ist ein um eine Drehachse 26 verschwenkbarer Betätigungsgriff 27 angebracht. Die Drehachse 26 ist senkrecht zur Axialrichtung im Oberteil 2 befestigt, so dass die Verschwenkung des Griffes 27 in einer Ebene senkrecht zur Radialebene verläuft. Der Verschwenkungsbereich des Griffes 27 ist in entriegelter Stellung von einem Anschlag 28, der an das Unterteil 1 der Vorrichtung angespritzt ist, begrenzt und in einer Verriegelungsstellung, die der Spreizraststellung der Stützelemente 4 entspricht, durch eine weitere Anschlagfläche 29 begrenzt.

Die Axialbewegung der zentralen Hülse 5 wird bei Verschwenken des Griffes 27 durch ein ebenfalls auf der Achse 26 verschwenkbares Hebelelement 30 verursacht. Die mechanische Bewegungskopplung zwischen Hebelelement 30 und Betätigungsgriff 27 erfolgt durch an der Innenseite des Griffes sowie am Hebelelement angeformte Mitnehmerflächen 31 bis 34. Alle vier Mitnehmerflächen 31 bis 34 weisen denselben Abstand von der Drehachse 26 auf, die Mitnehmerflächen 31 und 33 sowie die Mitnehmerflächen 32 und 34 liegen einander gegenüber.

Wird zum Zwecke der Entriegelung von der Bedienungsperson der Betätigungsgriff 27 an seinem freien Ende angehoben, so wird nach Überstreichen eines ersten Verschwenkungsbereiches des Betätigungsgriffes 27, in welchem noch keine Bewegung des Hebelelementes 30 durch die Verschwenkung des Betätigungsgriffes 27 erfolgt, die Mitnehmeröffnungsfläche 33 des Betätigungsgriffes 27 die ihr gegenüberliegende Mitnehmeranschlagfläche 31 unter Druck beaufschlagen und dadurch bei weiterer Verschwenkung des Hebels 27 auf den Anschlag 28 zu das Hebelelement 30 in gleicher Richtung (in Fig. 1; 2 im Uhrzeigersinn) ebenfalls verschwenken.

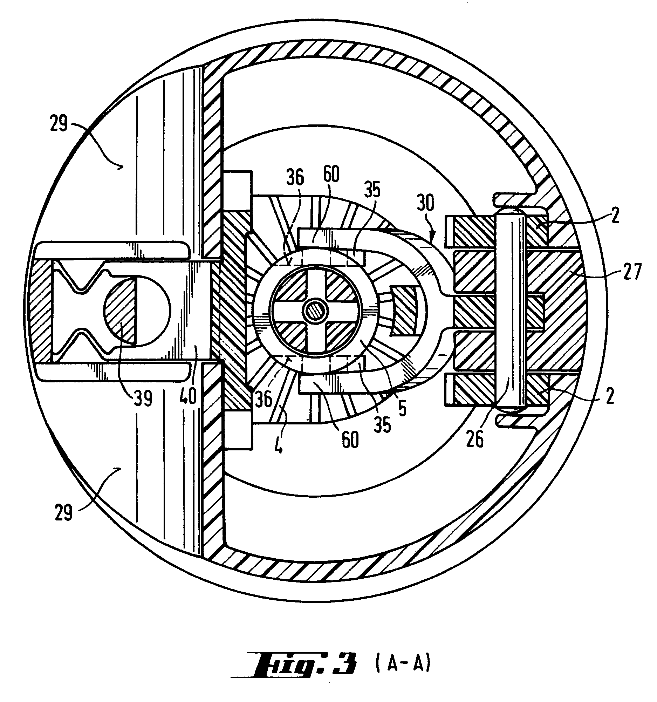

Das freie Ende des Hebelelementes 30 hat die Form einer Gabel 60 (siehe Fig. 3) und umgreift beidseitig die zentrale Hülse 5, wobei an den Innenseiten der Gabelenden angeordnete, in Radialrichtung abstehende Führungsnasen 35 in je eine die zentrale Hülse 5 flankierende Längsnuten 36 eingreifen.

Aufgrund dieser beweglichen mechanischen Verkopplung des freien gabelförmigen Endes des Hebelelementes 30 mit der zentralen Hülse 5 wird bei Aufwärtsbewegung des gabelförmigen Endes die zentrale Hülse 5 aus ihrer verrasteten Stellung emporgehoben und mit ihrem oberen Ende axial zu dem Anschlag 13 geführt. In dieser Stellung kann von der Bedienungsperson die Verschlussvorrichtung leicht aus dem Behälterstutzen 7 entnommen werden.

Nach Beendigung des Füllvorganges kann das Unterteil 1 der Vorrichtung wiederum in den Füllstutzen 7 des Behälters eingeführt und der Betätigungsgriff 27 gegen den Uhrzeigersinn (siehe Fig. 1) verschwenkt werden. Nach Überstreichen des freien, antriebslosen Schwenkbereiches wird die Mitnehmerschliessfläche 34 die am Hebelelement 30 angebrachte Mitnehmeranschlagfläche 32 nach unten drücken und das Hebelelement 30 der Schwenkbewegung des Betätigungsgriffes 27 folgen. Durch die Abwärtsbewegung des gabelförmigen Endes des Hebelelementes 30 wird die zentrale Hülse 5 auf den Anschlag 12 zugedrückt und die Verriegelung der Vorrichtung erfolgt in oben beschriebener Weise.

Die Mitnehmerflächen 33 und 34, die an der Innenseite des Betätigungsgriffes 27 angeformt sind, schliessen beim in Fig. 1 und 2 gezeigten Ausführungsbeispiel einen Winkel von ca. 60° ein, wohingegen die am Hebelelement 30 angeformten Mitnehmeranschlagflächen 31 und 32 gegenseitig parallel angeordnet sind. Durch die gegenseitige Anordnung der Mitnehmerflächen 33 und 34 unter einem Winkel, der grösser ist als der Winkel, den die Mitnehmeranschlagflächen 31 und 32 einschliessen, wird bewirkt, dass der Betätigungsgriff 27 von der Bedienungsperson beim Entriegeln und Verriegeln wie oben erwähnt zunächst in einem antriebslosen Winkelbereich verschwenkt werden kann (beim gezeigten Beispiel ca. 60°), wodurch eine leichte und kraftsparende Verriegelung und Entriegelung erzielt wird.

Zur Verbesserung der Dichteigenschaften und des festen Sitzes der Vorrichtung im Behälterstutzen 7 kann die Innenwandung 6 des Stutzens 7 beispielsweise mit einer Ringnut 37 versehen sein, in welche der Dichtungsring 3 durch die Spreizelemente 4 in der Verriegelungsstellung der Vorrichtung hineingepresst wird. Eine ähnlich vorteilhafte Wirkung könnte auch durch eine Stufe oder eine Rändelung an der Innenwandung 6 des Stutzens 7 bewirkt werden.

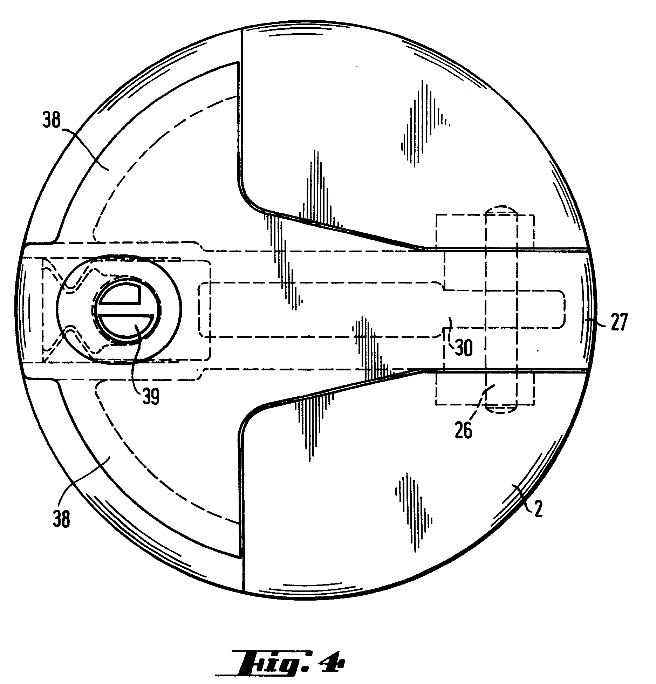

Der Betätigungsgriff 27 ist im Oberteil 2 der Vorrichtung versenkt, lediglich an seinem freien Ende stehen zwei Griffplatten 38 (siehe Fig. 4) vom Oberteil 2 der Vorrichtung in radialer Richtung ab. Durch diese Formgebung ist zum einen ein vorteilhaftes Aussehen der Verschlussvorrichtung gewährleistet, zum anderen werden auch abstehende, gefährliche Kanten vermieden, was beispielsweise bei der Verwendung der Verschlussvorrichtung als Tankdeckel an der Aussenseite eines Kraftfahrzeuges notwendig ist.

Um missbräuchliches Öffnen der Verschlussvorrichtung zu verhindern, ist der Betätigungsgriff 27 zwischen den beiden Griffplatten 38 mit einem Schloss 39 versehen, dessen Sperriegel 40 eine am Oberteil 2 der Vorrichtung angespritzte Nase 41 untergreift.

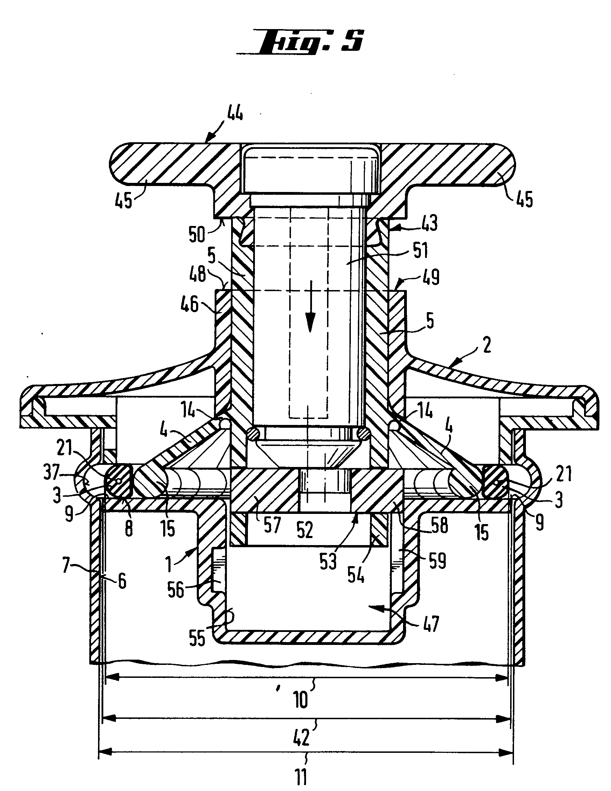

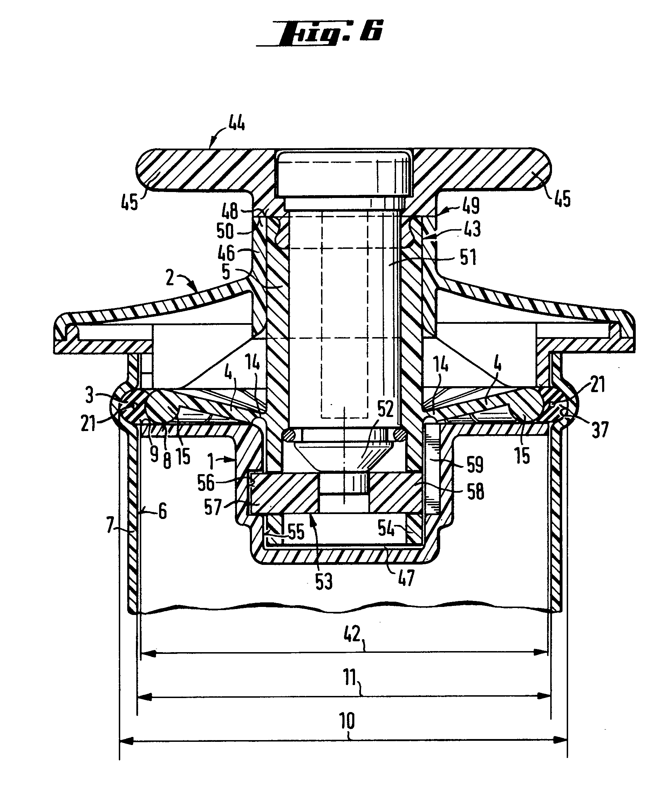

Bei dem in den Figuren 5 und 6 gezeigten Ausführungsbeispiel geht die zentrale Hülse 5 durch das Oberteil 2 der Verschlussvorrichtung hindurch. An ihrem oberen Ende 43 ist ein kreisscheibenförmiger Betätigungsknauf 44 befestigt, der radial nach aussen abstehende Betätigungsvorsprünge 45 aufweist.

Die Führung der zentralen Hülse 5 im Gehäuse erfolgt einerseits durch ein Führungsrohr 46, welches die Öffnung in der Oberseite 2 bildet, durch welche die zentrale Hülse 5 nach oben hindurchgeht. Andererseits ist die Hülse 5 in einer topfartigen Ausformung 47 des Unterteiles 1 axial verschieblich zwangsgeführt.

Die Oberkante 48 des Führungsrohres 46 bildet einen kreisförmigen Axialanschlag 49, an welchem die Knaufunterseite 50 in Verriegelungsstellung anliegt.

Im Inneren der zentralen Hülse 5 ist ein Schliesszylinder 51 gelagert, der mit der zentralen Hülse 5 bei Betätigung der Verschlussvorrichtung axial verschoben wird. Der Schliesszylinder 51 lenkt an seinem unteren Ende 52 einen Riegel 53 an, der in Radialrichtung im unteren Ende 54 der zentralen Hülse 5 radial verschieblich gelagert ist und in Verschlussstellung des Schliesszylinders 51 über die Hülse 5 hinaussteht. In einer Seitenwand 55 der topfartigen Ausformung 47 ist eine Nische 56 eingeformt, in die in Verschlussstellung das erste Ende 57 des Riegels 53 eingreift. Das zweite Ende 58 des Riegels 53 steht in Entriegelungsstellung in Radialrichtung aus der Hülse hinaus und ragt zur Drehsicherung in eine axiale Führungsnut 59 hinein, die im Bereich der topfartigen Ausnehmung 47 eingebracht ist und der Nische 56 gegenüberliegt.

**Patentansprüche**

1. Verschlussvorrichtung, insbesondere Deckel für Flüssigkeitsbehälter in Kraftfahrzeugen, mit
1. einem einen Füllstutzen (7) des Behälters überragenden Oberteil,
2. einem in Axialrichtung in den Füllstutzen (7) hineinragenden Unterteil und
3. einem Dichtungsring (3), der
    3.1 zwischen Verschlussvorrichtung und Füllstutzen (7) einpressbar angeordnet ist und
    3.2 das in den Füllstutzen (7) hineinragende Unterteil umspannt, gekennzeichnet durch folgende Merkmale:
4. Der Dichtungsring (3) ist durch radial bewegliche, manuell betätigbare Spreizlamellen (4) an seinem Innendurchmesser radial abgestützt.
5. Die Spreizlamellen (4) sind zwischen einer Spreizraststellung und einer Entlastungsstellung zwangsgeführt.
    5.1 In der Spreizraststellung der Spreizlamellen (4) ist bei nicht eingeführter Verschlussvorrichtung der Aussendurchmesser (10) des Dichtungsringes (3) grösser als der Innendurchmesser (11) des Füllstutzens (7).

    5.2 In der Entlastungsstellung der Spreizlamellen (4) ist der Aussendurchmesser (10) des Dichtungsringes (3) kleiner/gleich dem Innendurchmesser (11) des Füllstutzens (7).
2. Verschlussvorrichtung nach Anspruch 1, gekennzeichnet durch folgende Merkmale:
1. Die radial beweglichen Spreizlamellen (4) sind an ihren radial inneren Enden mechanisch mit einer in Axialrichtung verschieblichen zentralen Hülse (5) verbunden.
2. Der Verschiebeweg der Hülse (5) ist durch zwei Anschläge (12, 13) begrenzt.
3. Verschlussvorrichtung nach den Ansprüchen 1 und 2, gekennzeichnet durch folgende Merkmale:
1. Das Unterteil (1) der Vorrichtung ist im wesentlichen kreisscheibenförmig ausgebildet und sein Aussendurchmesser (42) der Oberseite (9) des unteren Tellers deckt sich im wesentlichen (ein wenig kleiner) mit dem lichten Innendurchmesser des Füllstutzens (7).
2. Der durchschnittliche Abstand zwischen dem radial äusseren Umfang der Spreizlamellen (4) in Spreizraststellung und dem Innendurchmesser (11) des Füllstutzens (7) ist kleiner als der in radialer Richtung gemessene Querschnitt des Dichtungsringes (3) derart, dass sich bei auf den Füllstutzen (7) aufgesetzter Verschlussvorrichtung die Unterseite (8) des Dichtungsringes (3) in Axialrichtung gegen die von der Oberseite (9) des Unterteiles (1) gebildete Anlagefläche und die Radialrichtung gegen die von der Innenwand (6) des Füllstutzens (7) gebildete Anlagefläche deformiert.
4. Verschlussvorrichtung nach mindestens einem der vorhergehenden Ansprüche, gekennzeichnet durch folgende Merkmale:
1. Die Spreizlamellen (4) und die zentrale Hülse (5) sind einstückig aus Kunststoff geformt.
2. Die mechanischen Verbindungen der Spreizlamellen (4) mit der zentralen Hülse (5) sind als dünne, flexible Verbindungsstege (14) ausgebildet.
3. Die Spreizlamellen (4) stehen strahlenförmig in radialer Richtung vom äusseren Umfang der zentralen Hülse (5) ab.
5. Verschlussvorrichtung nach mindestens einem der vorhergehenden Ansprüche, gekennzeichnet durch folgende Merkmale:
1. Die Spreizlamellen (4) verlaufen in ihren radialen äusseren Enden (15) in nach oben gerichteten Nasen (17).
2. Die Nasen (17) sind an ihren dem Dichtungsring (3) zugewandten Aussenseiten mit zur radialen Bewegungsrichtung der Spreizlamellen (4) etwa senkrechten Druckflächen (16) versehen.
6. Verschlussvorrichtung nach mindestens einem der vorhergehenden Ansprüche, gekennzeichnet durch folgende Merkmale:
1. Die Spreizlamellen (4) sind zwischen ihrem mit der Hülse (5) verbundenen Ende und ihren Nasen (17) konvex bogenförmig nach unten ausgeformt.
2. An die Oberseite (9) des Unterteiles (1) der Verschlussvorrichtung sind den konvexen Ausformungen (19) der Spreizlamellen (4) gegenüberliegende konkave Anlageschrägflächen (20) angeformt.

3. In Spreizraststellung liegen die konvexen Ausformungen (19) im wesentlichen formschlüssig an den konkaven Anlageschrägflächen (20) an.

4. Die konvexen Ausformungen (19) weisen etwa dieselbe Krümmungskurve wie die konkaven Anlageschrägflächen (20) auf.

7. Verschlussvorrichtung nach mindestens einem der vorhergehenden Ansprüche, gekennzeichnet durch folgende Merkmale:

1. Die Unterseite (18) der Spreizlamellen (4) schliesst in Spreizstellung mit der Axialrichtung einen grösseren Winkel ein als in Entlastungsstellung.

2. Die Verbindungsstege (14) liegen in Spreizstellung unterhalb, in Entlastungsstellung oberhalb der imaginären Verbindungslinie der Zentren (21) der sich radial gegenüberliegenden Dichtungsringquerschnitte.

8. Verschlussvorrichtung nach mindestens einem der vorhergehenden Ansprüche, dadurch gekennzeichnet, dass die äusseren Enden (15) der Spreizlamellen (4) zwischen von Unterteil (1) und Oberteil (2) der Vorrichtung gebildeten ebenen Gleitflächen in radialer Richtung verschieblich zwangsgeführt sind.

9. Verschlussvorrichtung nach mindestens einem der vorhergehenden Ansprüche, gekennzeichnet durch folgende Merkmale:

1. An dem den Füllstutzen (7) überragenden Oberteil (2) ist ein um eine Drehachse (26) verschwenkbarer Betätigungsgriff (27) angeordnet.

   1.1 Die Drehachse (26) ist rechtwinklig zur Axialrichtung exzentrisch im Oberteil (2) befestigt.

   1.2 Die wirksame Hebellänge des Betätigungshebels (27) ist etwa gleich dem Durchmesser des Oberteils (2) der Vorrichtung.

2. Der Verschwenkungswinkel des Betätigungsgriffes (27) ist durch einen am Oberteil (2) der Vorrichtung angespritzten Anschlag (28) begrenzt.

   2.1 Der Betätigungsgriff (27) ist zwischen einer durch den Anschlag (28) begrenzten Öffnungsstellung und einer verrasteten Verschlussstellung verschwenkbar.

10. Verschlussvorrichtung nach mindestens einem der vorhergehenden Ansprüche, gekennzeichnet durch folgende Merkmale:

1. Der Betätigungsgriff (27) steht mit der zentralen Hülse (5) über ein Hebelelement (30) in antriebsmässiger Verbindung.

   1.1 Das Hebelelement (30) ist gegen den Betätigungsgriff (27) verschwenkbar an seinem einen Ende auf der Drehachse (26) geführt.

   1.2 Die Schwenkbewegung des Hebelelementes (30) und des Betätigungsgriffes (27) liegen in derselben, die axiale Richtung beinhaltende Ebene.

11. Verschlussvorrichtung nach mindestens einem der vorhergehenden Ansprüche, gekennzeichnet durch folgende Merkmale:

1. Die Schwenkbewegung des Betätigungsgriffes (27) ist durch eine an der Innenseite des Betätigungsgriffes (27) angeformte Mitnehmeröffnungsfläche (33) und eine Mitnehmerverschlussfläche (34) sowie am Hebelelement (30) angeordnete Mitnehmeranschlagflächen (31, 32) auf das Hebelelement (30) übertragbar.

   1.1 Die Mitnehmerflächen (31 bis 34) weisen denselben Abstand von der Drehachse (26) auf.

   1.2 Die Mitnehmeröffnungsfläche (33) schliesst mit der Mitnehmerverschlussfläche (34) einen grösseren Winkel ein als die am Hebelelement (30) angeformten Mitnehmeranschlagflächen (31, 32).

2. Der maximale Verschwenkungswinkel des Betätigungsgriffes (27) ist grösser als der maximale Verschwenkungswinkel des Hebelelementes (30).

   2.1 In Öffnungsstellung schliesst die Mitnehmerverschlussfläche (34) mit der ihr gegenüberliegenden Mitnehmeranschlagfläche (32) in etwa einen Winkel ein, welcher der Differenz der von Mitnehmerverschlussfläche (34) und Mitnehmeröffnungsfläche (33) einerseits und von Mitnehmeranschlagflächen (31, 32) andererseits gebildeten Winkel entspricht.

   2.2 In Verschlussstellung schliesst die Mitnehmeröffnungsfläche (33) mit der ihr gegenüberliegenden Mitnehmeranschlagfläche in etwa einen Winkel ein, welcher der Differenz der von Mitnehmerverschlussfläche (34) und Mitnehmeröffnungsfläche (33) einerseits und von den Mitnehmeranschlagflächen (31, 32) andererseits gebildeten Winkel entspricht.

   2.3 In Öffnungsstellung liegt die Mitnehmeröffnungsfläche (33) in etwa parallel zu den Mitnehmeranschlagflächen (31, 32), in Verschlussstellung liegt die Mitnehmerverschlussfläche (34) in etwa parallel zu den Mitnehmeranschlagflächen (31, 32).

12. Verschlussvorrichtung nach mindestens einem der vorhergehenden Ansprüche, gekennzeichnet durch folgende Merkmale:

1. Das Hebelelement (30) ist an seinem freien Ende gabelförmig geteilt.

   1.1 Die Gabel (60) umgreift das zentrale Hebelelement (5) zweiseitig.

   1.2 Die Gabel (60) trägt an ihrer Innenseite senkrecht zur Axialrichtung abstehende Führungsnasen (35), welche in zwei die zentrale Hülse (5) flankierende, senkrecht zur Axialrichtung ausgedehnte Längsnuten (36) eingreifen.

13. Verschlussvorrichtung nach mindestens einem der vorhergehenden Ansprüche, gekennzeichnet durch folgende Merkmale:

1. In dem durch den Dichtungsring (3) beaufschlagten Teil der Füllstutzeninnenwandung ist eine Ringnut (37) oder eine Stufe eingebracht.

   1.1 In der Spreizraststellung greift der äussere Rand des Dichtungsringes (3) in die Ringnut (37) ein.

   1.2 In Spreizraststellung hintergreift der äussere Rand des Dichtungsringes (3) die Stufe.

14. Verschlussvorrichtung nach mindestens einem der vorhergehenden Ansprüche, gekennzeichnet durch folgende Merkmale:

1. Der Betätigungsgriff (27) ist im Oberteil (2) der Vorrichtung versenkt.

2. Der Betätigungsgriff (27) ist an seinem freien Ende mit Griffplatten (38) versehen, die vom Oberteil (1) der Vorrichtung in radialer Richtung frei abstehen.

3. Zwischen den Griffplatten (38) ist ein Schloss (39) angeordnet.

    3.1 Der Sperriegel (40) des Schlosses (39) untergreift in Radialrichtung eine am Oberteil (2) angeformte Nase (41).

15. Verschlussvorrichtung nach mindestens einem der vorhergehenden Ansprüche, gekennzeichnet durch folgende Merkmale:

1. Das Unterteil (1) der Vorrichtung ist in seinem Zentrum mit einer zylindrischen, in Axialrichtung verlaufenden Ausnehmung (23) zur Aufnahme eines üblichen Belüftungsventils (24) versehen.

2. Die zylindrische Ausnehmung (23) setzt sich nach oben in einer durch den Führungszapfen (22) der zentralen Hülse (5) axial hindurchgreifenden Belüftungsröhre (25) fort.

16. Verschlussvorrichtung nach mindestens einem der vorhergehenden Ansprüche, gekennzeichnet durch folgende Merkmale:

1. Die zentrale Hülse (5) steht in Axialrichtung durch das Oberteil (2) der Verschlussvorrichtung hindurch.

2. Am oberen Ende (43) der zentralen Hülse (5) ist ein im wesentlichen kreisscheibenförmiger, mit der Hülse (5) axial verschiebbarer Betätigungsknauf (44) angeordnet.

17. Verschlussvorrichtung nach Anspruch 16, dadurch gekennzeichnet, dass die zentrale Hülse (5) in Axialrichtung durch ein am Oberteil (2) angeformtes Führungsrohr (46) sowie eine topfartige Ausformung (47) des Unterteils (1) zwangsgeführt ist.

18. Verschlussvorrichtung nach Anspruch 17, gekennzeichnet durch folgende Merkmale:

1. Die Oberkante (48) des Führungsrohrs (46) ist als kreisförmiger Axialanschlag (49) ausgebildet.

2. In Spreizraststellung liegt die Knaufunterseite (50) am Axialanschlag (49) an.

19. Verschlussvorrichtung nach mindestens einem der vorhergehenden Ansprüche, gekennzeichnet durch folgende Merkmale:

1. In der zentralen Hülse (5) ist ein Schliesszylinder (51) gelagert,

    1.1 dessen Riegel in Spreizraststellung radial über die Hülse (5) hinaussteht und in eine Nische (56) im Bereich der topfartigen Ausformung (47) hineingreift sowie

    1.2 dessen mit einem Schlüsselloch versehene obere Stirnseite durch den Betätigungsgriff (27) oder den Betätigungsknauf (44) hindurchsteht.

20. Verschlussvorrichtung nach mindestens einem der vorhergehenden Ansprüche, gekennzeichnet durch folgende Merkmale:

1. Der Riegel (53) ist als radial verschiebbarer, im unteren Ende (52) der zentralen Hülse (5) gelagerter Bolzen ausgebildet, der

    1.1 in Entriegelungsstellung mit seinem dem die Verriegelung bewirkenden ersten Ende (57) gegenüberliegenden zweiten Ende (58) in eine im Bereich der topfartigen Ausformung (47) angeordneten axialen Führungsnut (59) eingreift.

## Revendications

1. Dispositif de fermeture, notamment bouchon pour réservoir de liquide dans des véhicules automobiles, comprenant:

1. une partie supérieure s'élevant plus haut qu'une tubulure de remplissage (7) du réservoir,

2. une partie inférieure qui est engagée dans la direction axiale dans la tubulure de remplissage (7) et

3. une bague d'étanchéité (3) qui

    3.1 est disposée avec possibilité de compression entre le dispositif de fermeture et la tubulure de remplissage (7) et

    3.2 entoure la partie inférieure engagée dans la tubulure de remplissage (7), caractérisé par les caractéristiques suivantes:

4. la bague d'étanchéité (3) est soutenue radialement au niveau de son diamètre intérieur par des lamelles d'écartement (4) mobiles dans la direction radiale, pouvant être actionnées manuellement,

5. les lamelles d'écartement (4) sont guidées positivement entre une position écartée de blocage et une position de détente,

    5.1 dans la position écartée de blocage des lamelles d'écartement (4), lorsque le dispositif de fermeture n'est pas enfoncé, le diamètre extérieur (10) de la bague d'étanchéité (3) est plus grand que le diamètre intérieur (11) de la tubulure de remplissage (7),

    5.2 dans la position de détente des lamelles d'écartement (4), le diamètre extérieur (10) de la bague d'étanchéité (3) est inférieur ou égal au diamètre intérieur (11) de la tubulure de remplissage (7).

2. Dispositif de fermeture suivant la revendication 1, caractérisé par les particularités suivantes:

1. les lamelles d'écartement (4) mobiles radialement sont reliées mécaniquement, à leurs extrémités radialement intérieures, à un manchon central (5) qui peut se déplacer en translation dans la direction axiale,

2. la course de translation du manchon (5) est limitée par deux butées (12, 13).

3. Dispositif de fermeture suivant les revendications 1 et 2, caractérisé par les particularités suivantes:

1. la partie inférieure (1) du dispositif est sensiblement en forme de disque circulaire et son diamètre extérieur (42) de la face supérieure (9) du plateau inférieur coïncide sensiblement (légèrement plus petit) avec le diamètre intérieur libre de la tubulure de remplissage (7),

2. la distance moyenne entre la périphérie radialement extérieure des lamelles (4) dans la position écartée de blocage et le diamètre intérieur (11) de la tubulure de remplissage (7) est plus petite que la section de la bague d'étanchéité (3) mesurée dans la direction radiale, dans une mesure telle que, lorsque le dispositif de fermeture est monté sur la tubulure de remplissage (7), la face inférieure (8) de la bague d'étanchéité (3) se déforme dans la direction axiale contre la surface d'appui formée par la face supérieure (9) de la partie inférieure (1) et dans la direction radiale contre la surface d'appui formée par la paroi intérieure (6) de la tubulure de remplissage (7).

4. Dispositif de fermeture suivant au moins l'une des revendications précédentes, caractérisé par les particularités suivantes:

1. les lamelles d'écartement (4) et le manchon central (5) sont formés d'une seule pièce en matière plastique,

2. les liaisons mécaniques entre les lamelles d'écartement (4) et le manchon central (5) sont constituées par des voiles de liaison minces et flexibles (14),

3. les lamelles d'écartement (4) font saillie à la façon de rayons dans la direction radiale sur la périphérie extérieure du manchon central (5).

5. Dispositif de fermeture suivant au moins l'une des revendications précédentes, caractérisé par les particularités suivantes:

1. les lamelles d'écartement (4) se terminent à leurs extrémités radiales extérieures (15) par des becs (17) dirigés vers le haut,

2. les becs (17) sont munis au niveau de leurs faces extérieures dirigées vers la bague d'étanchéité (3) de surfaces de pression (16) à peu près perpendiculaires à la direction du déplacement des lamelles d'écartement (4).

6. Dispositif de fermeture suivant au moins l'une des revendications précédentes, caractérisé par les particularités suivantes:

1. les lamelles d'écartement (4) sont conformées avec une forme convexe vers le bas, en arc de cercle, entre leur extrémité reliée au manchon (5) et leur bec (17),

2. à la face supérieure (9) de la partie inférieure (1) du dispositif de fermeture, sont formées des surfaces obliques d'appui concaves (20) qui font face aux formations convexes (19) des lamelles d'écartement (4),

3. dans la position écartée de blocage, les formations convexes (19) sont appuyées sur les surfaces obliques d'appui concaves (20) en formant sensiblement des liaisons par sûreté de forme,

4. les formations convexes (19) présentent à peu près la même courbure que les surfaces obliques d'appui concaves (20).

7. Dispositif de fermeture suivant au moins l'une des revendications précédentes, caractérisé par les particularités suivantes:

1. la face inférieure (18) des lamelles d'écartement (4) forme un plus grand angle avec la direction axiale dans la position écartée que dans la position de détente,

2. les voiles de liaison (14) se trouvent au-dessus de la ligne imaginaire joignant les centres (21) des sections de la bague d'étanchéité qui leur sont radialement opposées dans la position écartée et se trouvent au-dessous de cette ligne dans la position de détente.

8. Dispositif de fermeture suivant au moins l'une des revendications précédentes, caractérisé en ce que les extrémités extérieures (15) des lamelles d'écartement (4) sont guidées positivement en translation dans la direction axiale entre des surfaces de glissement planes formées par la partie inférieure (1) et par la partie supérieure (2) du dispositif.

9. Dispositif de fermeture suivant au moins l'une des revendications précédentes, caractérisé par les particularités suivantes:

1. sur la partie supérieure (2) qui déborde de la tubulure de remplissage (7), est montée une poignée de manoeuvre (27) qu'on peut faire pivoter autour d'un axe d'articulation (26),

1.1 l'axe d'articulation (26) est fixé dans la partie supérieure (2) dans une position excentrique et perpendiculairement à la direction axiale,

1.2 la longueur effective du bras de levier du levier de manoeuvre (27) est à peu près égale au diamètre de la partie supérieure (2) du dispositif,

2. l'angle de pivotement de la poignée de manoeuvre (27) est limité par une butée (28) venue de moulage par injection sur la partie supérieure (2) du dispositif,

2.1 la poignée de manoeuvre (27) peut pivoter entre une position d'ouverture limitée par la butée (28) et une position de fermeture verrouillée.

10. Dispositif de fermeture suivant au moins l'une des revendications précédentes, caractérisé par les particularités suivantes:

1. la poignée de manoeuvre (27) est en liaison pour l'entraînement avec le manchon central (5) par l'intermédiaire d'un élément levier (30),

1.1 l'élément levier (30) est guidé à l'une de ses extrémités sur l'axe d'articulation (26) pour pouvoir pivoter par rapport à la poignée de manoeuvre (27),

1.2 le mouvement de pivotement de l'élément levier (30) et celui de la poignée de manoeuvre (27) se trouvent dans le même plan qui contient la direction axiale.

11. Dispositif de fermeture suivant au moins l'une des revendications précédentes, caractérisé par les particularités suivantes:

1. le mouvement de pivotement de la poignée de manoeuvre (27) peut être transmis à l'élément levier (30) par une surface entraîneuse d'ouverture (33) formée sur la face intérieure de la poignée de manoeuvre (27) et une surface entraîneuse de fermeture (34) ainsi que par des surfaces entraîneuses de butée (31, 32) prévues sur l'élément levier (30),

1.1 les surfaces entraîneuses (31 à 34) possèdent la même distance d'écartement par rapport à l'axe d'articulation (26),

1.2 la surface entraîneuse d'ouverture (33) forme avec la surface entraîneuse de fermeture (34) un plus grand angle que les surfaces entraîneuses de butée (31, 32) formées sur l'élément levier (30),

2. l'angle maximal de pivotement de la poignée de manoeuvre (27) est plus grand que l'angle maximal du pivotement de l'élément levier (30),

2.1 dans la position d'ouverture, la surface entraîneuse de fermeture (34) forme avec la surface entraîneuse de butée (32) qui lui fait face à peu près un angle qui correspond à la différence entre, d'une part, l'angle formé par la surface entraîneuse de fermeture (34) et la surface entraîneuse d'ouverture (33) et, d'autre part, l'angle formé entre les surfaces entraîneuses de butée (31, 32),

2.2 dans la position de fermeture, la surface entraîneuse d'ouverture (33) forme avec la surface entraîneuse de butée (31) qui lui fait face approximativement un angle qui correspond à la différence entre, d'une part, l'angle formé par la surface entraîneuse de fermeture (34) et la surface entraîneuse d'ouverture (33) et, d'autre part, l'angle formé entre les surfaces entraîneuses de butée (31, 32),

2.3 dans la position d'ouverture, la surface entraîneuse d'ouverture (33) est à peu près parallèle aux surfaces entraîneuses de butée (31, 32) et, dans la position de fermeture, la surface entraîneuse de fermeture (34) est à peu près parallèle aux surfaces entraîneuses de butée (31, 32).

12. Dispositif de fermeture suivant au moins l'une des revendications précédentes, caractérisé par les particularités suivantes:

1. l'élément levier (30) est divisé en forme de fourche à son extrémité libre,

   1.1 la fourche (60) embrasse l'élément levier central (5) des deux côtés,

   1.2 la fourche (60) porte sur sa face intérieure des becs de guidage (35) qui font saillie perpendiculairement à la direction axiale et qui sont engagés dans deux rainures longitudinales (36) qui encadrent le manchon central (5) et s'étendent perpendiculairement à la direction axiale.

13. Dispositif de fermeture suivant au moins l'une des revendications précédentes, caractérisé par les particularités suivantes:

1. dans la partie de la paroi intérieure de la tubulure de remplissage qui est sollicitée par la bague d'étanchéité (3), est formée une gorge annulaire (37) ou un épaulement,

   1.1 dans la position écartée de blocage, le bord extérieur de la bague d'étanchéité (3) est engagé dans la rainure annulaire (37),

   1.2 dans la position écartée de blocage, le bord extérieur de la bague d'étanchéité est engagé derrière l'épaulement.

14. Dispositif de fermeture suivant au moins l'une des revendications précédentes, caractérisé par les particularités suivantes:

1. la poignée de manoeuvre (27) est noyée dans la partie supérieure (2) du dispositif,

2. la poignée de manoeuvre (27) est munie à son extrémité libre de plaques de prise (38) qui font saillie librement dans la direction radiale sur la partie supérieure (1) du dispositif,

3. entre les plaques de prise (38), est disposée une serrure (39),

   3.1 le pêne (40) de la serrure (39) est engagé dans une direction radiale sous un bec (41) formé sur la partie supérieure (2).

15. Dispositif de fermeture suivant au moins l'une des revendications précédentes, caractérisé par les particularités suivantes:

1. la partie inférieure (1) du dispositif est munie en son centre d'un évidement cylindrique (23) orienté dans la direction axiale et destiné à recevoir un clapet de ventilation habituelle (24),

2. l'évidement cylindrique (23) se prolonge vers le haut par un tube de ventilation (25) qui traverse axialement le téton de guidage (22) du manchon central (5).

16. Dispositif de fermeture suivant au moins l'une des revendications précédentes, caractérisé par les particularités suivantes:

1. le manchon central (5) traverse dans la direction axiale la partie supérieure (2) du dispositif de fermeture,

2. à l'extrémité supérieure (43) du manchon central (5), est disposé un pommeau de manoeuvre (44), possédant sensiblement la forme d'un disque circulaire, et qui peut se déplacer en translation axiale avec le manchon (5).

17. Dispositif de fermeture suivant la revendication 16, caractérisé en ce que le manchon central (5) est guidé positivement dans la direction axiale par un tube de guidage (46) formé sur la partie supérieure (2) ainsi que par une formation (47) en forme de godet de la partie inférieure (1).

18. Dispositif de fermeture suivant la revendication 17, caractérisé par les particularités suivantes:

1. le bord supérieur (48) du tube de guidage (46) forme une butée axiale circulaire (49),

2. dans la position écartée de blocage, la face inférieure (50) du pommeau est en appui sur la butée axiale (49).

19. Dispositif de fermeture suivant au moins l'une des revendications précédentes, caractérisé par les particularités suivantes:

1. dans le manchon central (5), est monté un barillet de serrure (51),

   1.1 dont le pêne, en position écartée de blocage, fait saillie radialement au-delà du manchon (5) et est engagé dans une niche (56) ménagée dans la région de la formation (47) en forme de godet, et

   1.2 dont la face frontale supérieure, munie d'un trou de passage de la clé, fait saillie à travers la poignée (27) ou le pommeau de manoeuvre (44).

20. Dispositif de fermeture suivant au moins l'une des revendications précédentes, caractérisé par les particularités suivantes:

1. le pêne (53) est formé par une tige qui peut se déplacer en translation radialement dans l'extrémité inférieure (52) du manchon central (5), et qui

   1.1 dans la position de déverrouillage est engagée par sa deuxième extrémité (58) qui est à l'opposé de la première extrémité (57) déterminant le verrouillage, dans une rainure de guidage axiale (59) située dans la région de la formation (47) en forme de godet.

## Claims

1. Closing device, especially for fluid vessels in motor vehicles, with

1. a top part projecting above a filling nozzle (7) of the vessel,
2. a bottom part projecting in an axial direction into the filling nozzle (7), and
3. a sealing ring (3) which
   3.1 is arranged so that it can be pressed in between the closing device and the filling nozzle (7) and
   3.2 grips round the bottom part projecting into the filling nozzle (7), characterised by the following features:
4. the sealing ring (3) is supported radially on its inside diameter by radially movable, manually actuable spreading lamellae (4),
5. the spreading lamellae (4) are guided forcibly between a spreading engagement position and a relieving position,
   5.1 in the spreading engagement position of the spreading lamellae (4), when the closing device is not introduced the outside diameter (10) of the sealing ring (3) is greater than the inside diameter (11) of the filling nozzle (7),
   5.2 in the relieving position of the spreading lamellae (4), the outside diameter (10) of the sealing ring (3) is less than/equal to the inside diameter (11) of the filling nozzle (7).

2. Closing device according to claim 1, characterised by the following features:
1. the radially movable spreading lamellae (4) are connected machanically at their radially inner ends to a central sleeve (5) displaceable in an axial direction,
2. the displacement distance of the sleeve (5) is limited by two stops (12, 13).

3. Closing device according to claims 1 and 2, characterised by the following features:
1. the bottom part (1) of the device is made essentially in the form of a circular disc and the outside diameter (42) of the top side (9) of the bottom plate coincides essentially with (but is a little less than) the clear inside diameter of the filling nozzle (7),
2. the average distance between the radially outer periphery of the spreading lamellae (4) in the spreading engagement position and the inside diameter (11) of the filling nozzle (7) is less than the cross-section of the sealing ring (3), measured in a radial direction, so that when the closing device is attached on the filling nozzle (7) the underside (8) of the sealing ring (3) is deformed in an axial direction against the bearing face formed by the top side (9) of the bottom part (1) and in a radial direction against the bearing surface formed by the inner wall (6) of the filling nozzle (7).

4. Closing device according to at least one of the preceding claims, characterised by the following features:
1. the spreading lamellae (4) and the central sleeve (5) are formed in one piece from plastic,
2. the mechanical connections between the spreading lamellae (4) and the central sleeve (5) are designed as thin flexible connecting webs (14),
3. the spreading lamellae (4) radiate out in a radial direction from the outer periphery of the central sleeve (5).

5. Closing device according to at least one of the preceding claims, characterised by the following features:
1. the spreading lamellae (4) extend, in their radial outer ends (15), in noses (17) directed upwards,
2. the noses (17) are provided, on their outer sides facing the sealing ring (3), with pressure surfaces (16) approximately perpendicular to the radial direction of movement of the spreading lamellae (4).

6. Closing device according to at least one of the preceding claims, characterised by the following features:
1. the spreading lamellae (4) are shaped convexly in a form of a downward arc between their end connected to the sleeve (5) and their noses (17),
2. on the top side (9) of the bottom part (1) of the closing device, the convex shaped portions (19) of the spreading lamellae (4) have formed on them concave sloping bearing surfaces (20) located opposite them,
3. in the spreading engagement position, the convex shaped portions (19) rest essentially positively against the concave sloping bearing surfaces (20),
4. the convex shaped portions (19) have approximately the same curvature as the concave sloping bearing surfaces (20).

7. Closing device according to at least one of the preceding claims, characterised by the following features:
1. the underside (18) of the spreading lamellae (4) forms, in the spreading position, a larger angle with the axial direction than in the relieving position,
2. in the spreading position, the connecting webs (14) are located underneath, and in the relieving position they are located above, the imaginary connecting line between the centres (21) of the sealing-ring cross-sections located radially opposite one another.

8. Closing device according to at least one of the preceding claims, characterised in that the outer ends (15) of the spreading lamellae (4) are forcibly guided displacably in a radial direction between the plane sliding surfaces formed by the bottom part (1) and the top part (2) of the device.

9. Closing device according to at least one of the preceding claims, characterised by the following features:
1. an actuating handle (27) pivotable about a pivot pin (26) is located on the top part (2) projecting above the filling nozzle (7),
   1.1 the pivot pin (26) is fastened eccentrically in the top part (2) at right angles to the axial direction,
   1.2 the effective lever length of the actuating lever (27) is approximately equal to the diameter of the top part (2) of the device,
2. the pivoting angle of the actuating handle (27) is limited by a stop (28) injection-moulded on the top part (2) of the device,

2.1 the actuating handle (27) is pivotable between an opening position limited by the stop (28) and a locked closing position.

10. Closing device according to at least one of the preceding claims, characterised by the following features:
1. the actuating handle (27) is connected in drive terms to the central sleeve (5) via a lever element (30),
   1.1 the lever element (30) is guided at one end on the pivot pin (26) so as to be pivotable towards the actuating handle (27),
   1.2 the pivoting movement of the lever element (30) and that of the actuating handle (27) lie in the same plane containing the axial direction.

11. Closing device according to at least one of the preceding claims, characterised by the following features:
1. the pivoting movement of the actuating handle (27) can be transmitted to the lever element (30) by means of a take-up opening surface (33), formed on the inside of the actuating handle (27), a take-up closing surface (34) and take-up stop surfaces (31, 32) located on the lever element (30),
   1.1 the take-up surfaces (31 to 34) are at the same distance from the pivot pin (26),
   1.2 the take-up opening surface (33) forms with the take-up closing surface (34) a larger angle than the take-up stop surfaces (31, 32) formed on the lever element (30),
2. the maximum pivoting angle of the actuating handle (27) is larger than the maximum pivoting angle of the lever element (30),
   2.1 in the opening position, the take-up closing surface (34) forms with the take-up stop surface (32) located opposite it approximately an angle which corresponds to the difference between the angles formed by the take-up closing surface (34) and take-up opening surface (33), on the one hand, and by the take-up stop surfaces (31, 32) on the other hand,
   2.2 in the closing position, the take-up opening surface (33) forms with the take-up stop surface (31) located opposite it approximately an angle which corresponds to the difference between the angles formed by the take-up closing surface (34) and take-up opening surface (33), on the one hand, and by the take-up stop surfaces (31, 32), on the other hand,
   2.3 in the opening position, the take-up opening surface (33) is approximately parallel to the take-up stop surfaces (31, 32), and in the closing position the take-up closing surface (34) is approximately parallel to the take-up stop surfaces (31, 32).

12. Closing device according to at least one of the preceding claims, characterised by the following features:
1. the lever element (30) is divided in the form of a fork at its free end,
   1.1 the fork (60) engages round the central lever element (5) on two sides,
   1.2 the fork (60) carries on its inner face guide noses (35) which project perpendicularly to the axial direction and which engage into two longitudinal grooves (36) flanking the central sleeve (5) and extending perpendicularly to the axial direction.

13. Closing device according to at least one of the preceding claims, characterised by the following features:
1. an annular groove (37) or a step is formed in the part of the filling-nozzle inner wall which is stressed by the sealing ring (3),
   1.1 in the spreading engagement position, the outer edge of the sealing ring (3) engages into the annular groove (37),
   1.2 in the spreading engagement position, the outer edge of the sealing ring (3) engages behind the step.

14. Closing device according to at least one of the preceding claims, characterised by the following features:
1. the actuating handle (27) is countersunk in the top part (2) of the device,
2. the actuating handle (27) is provided at its free end with handle plates (38) which project freely in a radial direction from the top part (1) of the device,
3. a lock (39) is located between the handle plates (38),
   3.1 the locking bolt (40) of the lock (39) engages in a radial direction under a nose (41) formed on the top part (2).

15. Closing device according to at least one of the preceding claims, characterised by the following features:
1. the bottom part (1) of the device is provided in its centre with a cylindrical recess (23) extending in an axial direction and intended for receiving a conventional ventilating valve (24),
2. the cylindrical recess (23) is continued upwards in a ventilating tube (25) extending axially through the guide journal (22) of the central sleeve (5).

16. Closing device according to at least one of the preceding claims, characterised by the following features:
1. the central sleeve (5) extends in an axial direction through the top part (2) of the closing device,
2. located at the top end (43) of the central sleeve (5) is an actuating knob (44) which essentially takes the form of a circular disc and which is axially displacable together with the sleeve (5).

17. Closing device according to claim 16, characterised in that the central sleeve (5) is forcibly guided in an axial direction through a guide tube (46), formed on the top part (2), and a pot-like shaped portion (47) of the bottom part (1).

18. Closing device according to claim 17, characterised by the following features:
1. the top edge (48) of the guide tube (46) is designed as a circular axial stop (49),
2. in the spreading engagement position, the underside (50) of the knob rests against the axial stop (49).

19. Closing device according to at least one of the preceding claims, characterised by the following features:

1. mounted in the central sleeve (5) is a closing cylinder (51),

    1.1 the bolt of which projects radially beyond the sleeve (5), in the spreading engagement position, and engages into a niche (56) in the region of the pot-like shaped portion (47), and

    1.2 of which the upper end face provided with a key hole extends through the actuating handle (27) or the actuating knob (44).

20. Closing device according to at least one of the preceding claims, characterised by the following features:

1. the bolt (53) is designed as a radially displacable pin which is mounted in the lower end (52) of the central sleeve (5) and which

    1.1 in the unlocking position, engages by means of its second end (58), located opposite the first end (57) causing locking, into an axial guide groove (59) located in the region of the pot-like shaped portion (47).

# Fig. 1

0 027 970

Fig. 2

17

**Fig. 3** (A-A)

Fig. 4

# Fig. 5

Fig. 6